Europäisches Patentamt

European Patent Office

Office européen des brevets

(11) Veröffentlichungsnummer: **0 431 432 A1**

## (12) EUROPÄISCHE PATENTANMELDUNG

(21) Anmeldenummer: 90122498.0

(22) Anmeldetag: 26.11.90

(51) Int. Cl.5: **H01R 9/07, H01R 23/66, H01R 35/02, H02G 11/00**

(30) Priorität: 07.12.89 DE 8914384 U

(43) Veröffentlichungstag der Anmeldung:
12.06.91 Patentblatt 91/24

(84) Benannte Vertragsstaaten:
DE FR GB IT

(71) Anmelder: kabelmetal electro GmbH
Kabelkamp 20 Postfach 260
W-3000 Hannover 1(DE)

(72) Erfinder: Schauer, Friedrich, Dipl.-Ing.
Forstweg 10
W-8501 Heroldsberg(DE)

(54) Vorrichtung zur Stromübertragung zwischen zwei Endstellen.

(57) Es wird eine Vorrichtung zur Stromübertragung zwischen zwei Endstellen angegeben, zwischen den eine der elektrischen Verbindung dienende, in Windungen verlaufende Flachband-Leitung mit mindestens zwei elektrischen Leitern angeordnet ist. Mindestens eine der beiden Endstellen ist relativ zu der anderen bewegbar. An die abisolierten Leiter der Flachband-Leitung sind jeweils Leiter einer weiterführenden Leitung elektrisch leitend anschließbar. Zum einfachen Anschluß unterschiedlicher Leitungen sind die abisolierten Leiter der Flachband-Leitung mindestens an einem Ende derselben in einer aus Isoliermaterial bestehenden Aufnahme unter Anlage an einem mechanisch festen Teil derselben festgelegt. Die Aufnahme hat außerdem eine Öffnung zum Einstecken eines Steckers mit federnden Kontakten, die mit den Leitern der weiterführenden Leitung verbunden sind und in ihrer Endposition an den Leitern der Flachband-Leitung anliegen.

Fig. 4

Die Erfindung betrifft eine Vorrichtung zur Stromübertragung zwischen zwei Endstellen, zwischen denen eine der elektrischen Verbindung dienende, in Windungen verlaufende Flachband-Leitung mit mindestens zwei elektrischen Leitern angeordnet ist, deren Länge wesentlich größer als der Abstand der beiden Endstellen voneinander ist, bei welcher mindestens eine der beiden Endstellen relativ zu der anderen bewegbar ist und bei welcher an die abisolierten Leiter der Flachband-Leitung jeweils Leiter einer weiterführenden Leitung elektrisch leitend anschließbar sind (DE-OS 36 41 706).

Geräte mit derartigen Vorrichtungen sind beispielsweise Aufroller, in denen eine elektrische Leitung auf einer Spule aufgewickelt ist. Die Leitung kann aus dem Gehäuse des Gerätes herausgezogen und unter der Wirkung einer Feder nach Fortfall der Zugkraft automatisch wieder aufgerollt werden. Bei dem Gerät kann es sich auch um die Stromzuführung für einen Prallschutz für Kraftfahrzeuge handeln, bei dem eine elektrische Leitung im Lenkrad eines Kraftfahrzeugs untergebracht ist. Ein wesentliches Problem bei diesen Geräten ist die Stromübertragung zwischen feststehenden und beweglichen Teilen. Dieses Problem tritt bei allen Geräten auf, bei denen zwei relativ zueinander bewegbare Endstellen vorhanden sind, von denen in den meisten Fällen eine als Festpunkt ausgebildet ist. Die für solche Fälle seit langem bekannten Schleifkontakte bzw. Schleifringe sind einem Verschleiß unterworfen und insbesondere bei niedrigen Stromstärken wegen der schwankenden Übergangswiderstände nachteilig.

Bei der eingangs erwähnten, bekannten Vorrichtung nach der DE-OS 36 41 706 erfolgt die Stromübertragung durch die nach Art eines Federhauses gewickelte Flachband-Leitung. Bei einer relativen Drehbewegung der beiden durch die Flachband-Leitung - im folgenden kurz als "FBL" bezeichnet - verbundenen Endstellen "atmet" die aufgewickelte FBL wie die Feder einer Uhr. Die Windungen werden in der einen Drehrichtung auf einen kleinen Durchmesser zusammengezogen. Sie gehen in der anderen Drehrichtung wieder auf einen größeren Durchmesser auf. An die abisolierten Leiter der FBL sind die Leiter einer weiterführenden Leitung angeschlossen. Die Verbindungsstelle zwischen den Leitern beider Leitungen ist von einem Schutzkörper aus Isoliermaterial umgeben. Damit ist eine komplette, aus gewickelter FBL und angeschlossenen, weiterführenden Leitungen bestehende Vorrichtung geschaffen. Diese Vorrichtung ist nur für einen speziellen Anwendungsfall einsetzbar, auf den Länge und Form der weiterführenden Leitungen abgestimmt sind. Der Anschluß anderer Leitungen an die FBL erfordert andere Werkzeuge.

Der Erfindung liegt die Aufgabe zugrunde, eine Vorrichtung mit einer in Windungen verlaufenden FBL anzugeben, bei welcher an die Leiter der FBL auf einfache Weise beliebig gestaltete weiterführende Leitungen angeschlossen werden können.

Diese Aufgabe wird bei einer Vorrichtung der eingangs geschilderten Art gemäß der Erfindung dadurch gelöst,
- daß die abisolierten Leiter der Flachband-Leitung mindestens an einem Ende derselben in einer aus Isoliermaterial bestehenden Aufnahme unter Anlage an einem mechanisch festen Teil derselben festgelegt sind und
- daß die Aufnahme eine Öffnung zum Einstekken eines Steckers mit federnden Kontakten aufweist, die mit den Leitern der weiterführenden Leitung verbunden sind und in ihrer Endposition an den Leitern der Flachband-Leitung anliegen.

Diese Vorrichtung ist für unterschiedlichste Ausführungsformen, unabhängig von der Art der weiterführenden Leitung bzw. Leitungen einsetzbar. An das Ende der jeweils weiterführenden Leitung muß nur ein Stecker mit federnden Kontakten angeschlossen werden, der in die am Ende der FBL angebrachte Aufnahme paßt. Die Leiter der FBL brauchen zur Kontaktgabe mit den federnden Kontakten der weiterführenden Leitung nur abisoliert und ohne besondere Befestigungsmittel in der Aufnahme angeordnet zu werden, so daß die Bearbeitung des Endes der FBL sehr einfach ist. Da die Leiter der FBL an einem mechanisch festen Teil der Aufnahme anliegen, an den sie bei eingeführtem Stecker durch die federnden Kontakte angedrückt werden, ist eine einwandfreie Kontaktgabe mit kleinem Übergangswiderstand sichergestellt.

Vorteilhafte Ausgestaltungen der Erfindung gehen aus den Unteransprüchen hervor.

Ein Ausführungsbeispiel des Erfindungsgegenstandes ist in den Zeichnungen dargestellt.

Es zeigen:

Fig. 1 und 2 schematisch Querschnitte durch zwei unterschiedliche Geräte mit einer Vorrichtung nach der Erfindung.

Fig. 3 eine Flachband-Leitung mit zwei gefalteten Enden in vergrößerter Darstellung.

Fig. 4 einen Schnitt durch Fig. 3 längs der Linie IV - IV in nochmals vergrößerter Darstellung.

Fig. 5 bis 7 Einzelheiten der Vorrichtung.

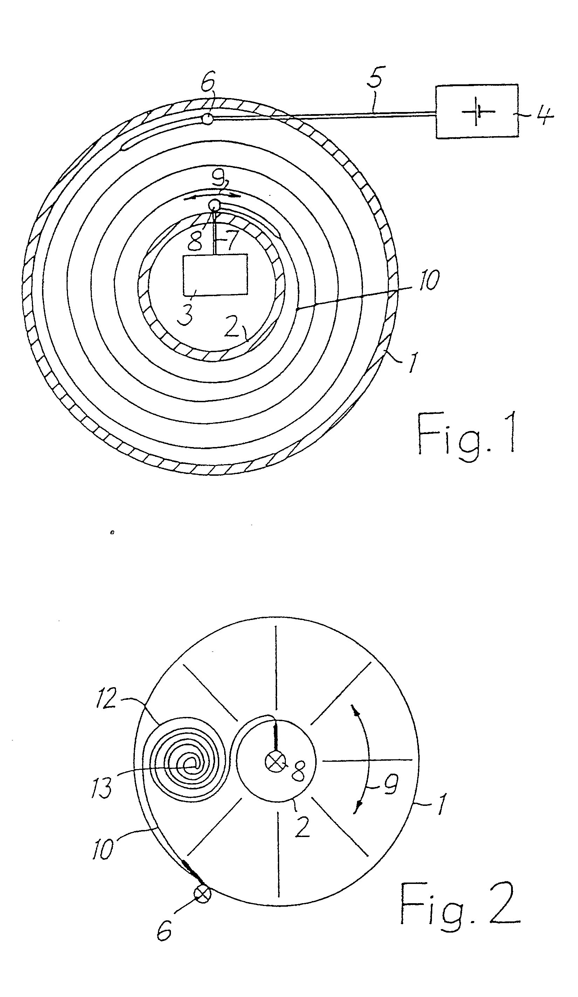

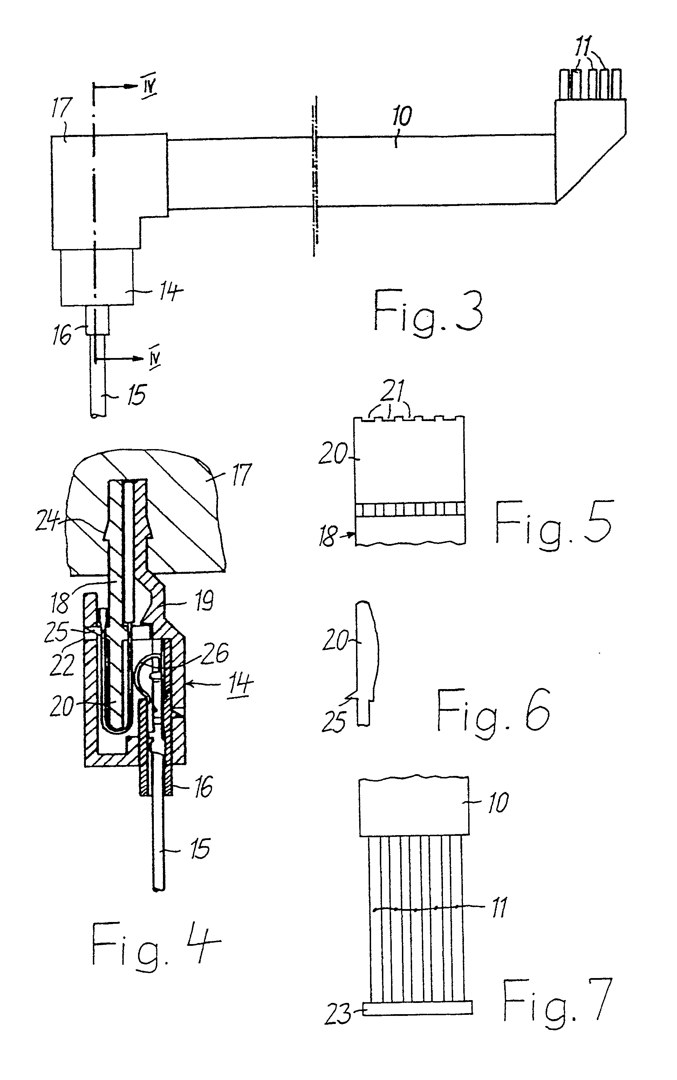

In Fig. 1 sind schematisch zwei beispielsweise kreisförmig ausgebildete Wände 1 und 2 des Gehäuses eines elektrischen Geräts dargestellt. Dieses Gerät kann beispielsweise ein in das Lenkrad eines Kraftfahrzeugs eingebautes Steuergerät sein. Zur Stromversorgung einer Elektronik 3 dieses Geräts ist dasselbe an die Batterie 4 des Kraftfahrzeugs angeschlossen. Die Batterie 4 ist über eine elektrische Leitung 5 mit einer als Festpunkt ausgeführten Endstelle 6 verbunden. Die Elektronik 3 ist über eine elektrische Leitung 7 an eine Endstelle 8 angeschlossen, die in Richtung des Doppelpfeiles 9 bewegbar ist. Zwischen den beiden Endstellen 6 und 8 ist eine FBL 10 angebracht. Sie ist im dargestellten Ausführungsbeispiel (Fig. 3) mit fünf Leitern 11 versehen, die auch unterschiedliche Querschnitte haben können. Es können auch mehr oder weniger als fünf Leiter in der FBL 10 angeordnet sein.

Die FBL 10 kann gemäß Fig. 1 zwischen den beiden Endstellen 6 und 8 in mehreren Windungen, also nach Art eines Federhauses von Uhren, angeordnet sein. Obwohl die Anzahl der Umdrehungen eines Lenkrades auf etwa sechs Umdrehungen begrenzt ist, sollen wesentlich mehr als sechs Windungen für die FBL 10 vorgesehen sein. Die Drehbewegung der Endstelle 8 macht sich dann für eine einzelne Windung der FBL 10 nicht wesentlich bemerkbar. Es wird lediglich der Durchmesser des aus allen Windungen der FBL 10 bestehenden Wickels verkleinert bzw. vergrößert.

Die FBL 10 ist vorzugsweise mit flachen Leitern 11 ausgerüstet. Diese Ausführungsform der FBL 10 ist besonders dünn und nimmt daher sehr wenig Raum ein. Grundsätzlich könnte die FBL 10 aber auch runde Leiter haben. Die Leitungsenden können durch Faltung der FBL 10 um 90° gegenüber der Flachband-Leitung selbst abgeknickt sein, so wie es in Fig. 3 dargestellt ist. Es ist dadurch jeweils eine Anschlußstelle gebildet, die rechtwinklig vom in Windungen verlaufenden Teil der FBL 10 absteht und an deren freien Enden die Leiter 11 zum Anschluß einer weiterführenden Leitung zur Verfügung stehen. Die Anschlußstellen können aber auch ohne Faltung der FBL 10 gebildet werden, indem die Leiter 11 derselben nur abisoliert werden. Die FBL 10 kann in den Anschlußstellen auch geteilt sein. Das bietet sich insbesondere dann an, wenn eine größere Anzahl von Leitern 11 in der FBL 10 vorhanden ist.

Die FBL 10 kann zwischen den beiden Endstellen 6 und 8 gemäß Fig. 2 auch als Bifilarspule 12 gewickelt sein. In der Bifilarspule 12 ist die FBL 10 etwa in ihrer Mitte umgebogen, so daß sich eine Umkehrstelle 13 ergibt. Von dort aus ist die FBL 10 zweilagig gewickelt. Wenn an ihren beiden Enden in entgegengesetzter Richtung gezogen wird, verkleinert die durch das Wickeln entstandene Bifilarspule 12 ihren Durchmesser. Infolge der Elastizität der FBL 10 wickelt sie sich wieder auf, wenn die an ihren Enden angreifenden Zugkräfte fortfallen. Der Durchmesser der Bifilarspule 6 in der Ausgangsstellung der Vorrichtung wird zweckmäßig so gewählt, daß er gleich dem kürzesten Abstand der beiden Endstellen 6 und 8 voneinander oder kleiner als dieser Abstand ist.

In Fig. 3 ist die FBL 10 so dargestellt, daß nur ihre Enden mit hier abgebogenen Anschlußstellen zu sehen sind. Ihr gewundener Teil ist aus der Darstellung nicht zu erkennen. Auf der rechten Seite der Darstellung ragen nur die abisolierten Leiter 11 aus dem Ende der FBL 10 heraus. Am anderen Anschlußende der FBL 10 ist eine Aufnahme 14 angebracht, die in Fig. 4 genauer dargestellt ist. In die Aufnahme 14 ist ein am Ende einer weiterführenden Leitung 15 angebrachter Stecker 16 eingesteckt.

Die Aufnahme 14 besteht in bevorzugter Ausführungsform aus steckbaren, federnd einrastenden Teilen, die eine einfache Montage ermöglichen. Zur Festlegung der steckbaren Teile kann das aus Fig. 1 ersichtliche Gehäuse mit den Wänden 1 und 2 verwendet werden, das in den Fig. 3 und 4 durch einen mit 17 bezeichneten Ausschnitt angedeutet ist.

Zu der Aufnahme 14 gehören außerdem zwei in das Gehäuse 17 einsteckbare Teile 18 und 19, die in montierter Position im Gehäuse 17 eingerastet sind und dabei die FBL 10 in einem isolierten Bereich zwischen sich einklemmen. Die abisolierten Leiter 11 liegen in Montageposition an einem Anlageteil 20 des Teils 18 an. Sie sind in bevorzugter Ausführungsform um das freie Ende desselben herumgebogen. In dieser Position liegen die Leiter 11 ohne gesonderte Befestigungselemente ausreichend fest am Anlageteil 20 an. Sie sind durch entsprechenden Abstand gegeneinander isoliert, so wie es aus Fig. 5 hervorgeht. Zur Sicherung dieses Abstandes können im Anlageteil 20 den Abmessungen der Leiter 11 entsprechende Vertiefungen 21 angebracht sein.

Die umgebogenen Enden der Leiter 11 werden in ihrer Position zusätzlich durch das die Aufnahme 14 vervollständigende Teil 19 festgelegt, wenn dasselbe in das Gehäuse 17 eingesteckt ist. In der Endposition des Teils 19 kann zusätzlich das Teil 18 an der Stelle 22 mit demselben verriegelt sein.

Das Anlageteil 20 kann flach ausgebildet sein. Es kann aber auch eine gemäß Fig. 6 gebogen verlaufende Fläche haben, an der die Leiter 11 anliegen.

Um den Zusammenhalt der Leiter 11 zu verbessern bzw. um deren Abstand voneinander leichter einhalten zu können, kann gemäß Fig. 7 am freien Ende der Leiter 11 ein Steg 23 der Isolierung der FBL 10 stehen gelassen werden, der mit um den Anlageteil 20 herumgebogen wird. Die Kontaktfläche der abisolierten Leiter 11 bleibt davon unberührt.

Zur Montage der Aufnahme 14 wird zunächst die FBL 10 beispielsweise so abisoliert, wie es aus Fig. 7 ersichtlich ist. Das so vorbereitete Ende der FBL 10 wird zusammen mit dem Teil 18 der Aufnahme 14 in das Gehäuse 17 eingesteckt, wobei der Teil 18 an der Stelle 24 einrastet. Die Leiter 11 werden dann um das Anlageteil 20 herumgebogen, so daß ihr Steg 23 hinter den Vorsprüngen 25 eingehängt ist. Die Aufnahme 14 wird dann mit dem Einstecken und Einrasten des Teils 19 in das Gehäuse 17 komplettiert. Die Leiter 11 bleiben durch eine im Teil 19 der Aufnahme 14 vorhandene Öffnung zur Kontaktgabe zugänglich.

Gemäß Fig. 4 ist in die Aufnahme 14 der am Ende der weiterführenden Leitung 15 angeformte Stecker 16 eingesteckt. Er ist mit federnden Kontakten 26 ausgerüstet, die mit den Leitern der Leitung 15 verbunden sind. Der Stecker 16 ist zweckmäßig so ausgeführt, daß er federnd einrastend in die Aufnahme 14 eingesteckt werden kann. Durch die federnden Kontakte 26 ist in der Endposition des Steckers 16 eine elektrisch leitende Verbindung mit den Leitern 11 der FBL 10 hergestellt, die ausreichend fest ist und geringe Übergangswiderstände gewährleistet. Das wird dadurch sichergestellt, daß die mit ausreichender Federkraft ausgerüsteten Kontakte 26 gegen die Leiter 11 drücken, die an dem Anlageteil 20 als feste Unterlage anliegen und nicht ausweichen können. Die federnden Kontakte 26 haben zweckmäßig so große Abmessungen mit einem entsprechenden Federweg, daß jede Schrumpfung von Teilen der Aufnahme 14 ausgeglichen wird.

Das Ende der FBL 10 ist mit der Montage der Aufnahme 14 so vorbereitet, daß jede gewünschte weiterführende Leitung 15 mit Leitern mit beliebigem Querschnitt angeschlossen werden kann. Es muß nur am Ende der Leitung 15 ein Stecker 16 mit den federnden Kontakten 26 angebracht sein, der in die Öffnung der Aufnahme 14 hineinpaßt.

## Ansprüche

1. Vorrichtung zur Stromübertragung zwischen zwei Endstellen, zwischen den eine der elektrischen Verbindung dienende, in Windungen verlaufende Flachband-Leitung mit mindestens zwei elektrischen Leitern angeordnet ist, deren Länge wesentlich größer als der Abstand der beiden Endstellen voneinander ist, bei welcher mindestens eine der beiden Endstellen relativ zu der anderen bewegbar ist und bei welcher an die abisolierten Leiter der Flachband-Leitung jeweils Leiter einer weiterführenden Leitung elektrisch leitend anschließbar sind, dadurch gekennzeichnet,
   - daß die abisolierten Leiter (11) der Flachband-Leitung (10) mindestens an einem Ende derselben in einer aus Isoliermaterial bestehenden Aufnahme (14) unter Anlage an einem mechanisch festen Teil (18) derselben festgelegt sind und

   - daß die Aufnahme (14) eine Öffnung zum Einstecken eines Steckers (16) mit federnden Kontakten (26) aufweist, die mit den Leitern der weiterführenden Leitung (15) verbunden sind und in ihrer Endposition an den Leitern (11) der Flachband-Leitung (10) anliegen.

2. Vorrichtung nach Anspruch 1, dadurch gekennzeichnet, daß zu der Aufnahme (14) zwei steckbare Teile (18,19) gehören, zwischen denen die Flachband-Leitung (10) in Montageposition eingeklemmt ist und von denen das eine als Anlage für die Leiter (11) der Flachband-Leitung (10) dient, während das andere die Öffnung zur Aufnahme des Steckers (16) aufweist.

3. Vorrichtung nach Anspruch 1 oder 2, dadurch gekennzeichnet, daß der als Anlage dienende Teil (18) der Aufnahme (14) einen Anlageteil (20) aufweist, an dem die Leiter (11) der Flachband-Leitung (10) in Montageposition anliegen.

4. Vorrichtung nach einem der Ansprüche 1 bis 3, dadurch gekennzeichnet, daß im Anlageteil (20) Vertiefungen (21) zur Aufnahme der Leiter (11) angebracht sind.

5. Vorrichtung nach einem der Ansprüche 1 bis 4, dadurch gekennzeichnet, daß an den Enden der abisolierten Leiter (11) ein Steg (23) aus Isoliermaterial vorhanden ist.

Fig.1

Fig.2

Fig. 3

Fig. 4

Fig. 5

Fig. 6

Fig. 7

Europäisches
Patentamt

**EUROPÄISCHER
RECHERCHENBERICHT**

Nummer der Anmeldung

**EP 90 12 2498**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-4 824 396   (SASAKI ET AL.) <br> * Spalte 2, Zeile 54 - Spalte 3, Zeile 2; Anspruch 1; Figur 1 * <br> — — — | 1 | H 01 R <br> 9/07 <br> H 01 R 23/66 |
| Y,A | US-A-3 950 067   (LEAVESLEY) <br> * Spalte 2, Zeilen 17 - 39; Figuren 1, 3, 5 * <br> — — — | 1,3 | H 01 R 35/02 <br> H 02 G 11/00 |
| A | US-A-3 277 425   (MARSHALL ET AL.) <br> * Spalte 2, Zeile 59 - Spalte 3, Zeile 9; Figur 3 * <br> — — — | 1 | |
| A | FR-A-2 307 906   (BOSCH-SIEMENS HAUSGERÄTE GMBH.) <br> * Seite 4, Zeilen 6 - 18; Figur 2 * <br> — — — | 1,5 | |
| A | FR-A-2 184 487   (JAEGER) <br> * Ansprüche 1-3; Figuren 1, 6, 7 * <br> — — — | 1 | |
| A | MACHINE DESIGN. vol. 43, no. 23, 16 September 1971, CLEVELAND US Seite 162 "Moving around with flat conductor cable" <br> — — — | 1 | |
| A | DE-A-2 513 635   (WALTER KELLER AG) <br> * Seite 4, Zeilen 6 - 10; Figuren 15-16 * <br> — — — — — | 1,5 | RECHERCHIERTE SACHGEBIETE (Int. Cl.5) <br><br> H 01 R <br> H 02 G |

Der vorliegende Recherchenbericht wurde für alle Patentansprüche erstellt

| Recherchenort | Abschlußdatum der Recherche | Prüfer |
|---|---|---|
| Den Haag | 26 März 91 | HORAK A.L. |

KATEGORIE DER GENANNTEN DOKUMENTE

X : von besonderer Bedeutung allein betrachtet
Y : von besonderer Bedeutung in Verbindung mit einer
      anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
      nach dem Anmeldedatum veröffentlicht worden ist
D : in der Anmeldung angeführtes Dokument
L : aus anderen Gründen angeführtes Dokument

\-\-\-\-\-\-\-\-\-\-\-\-\-\-\-\-\-\-\-\-\-\-\-\-\-\-\-\-\-\-\-\-

& : Mitglied der gleichen Patentfamilie,
      übereinstimmendes Dokument